# EUROPEAN PATENT APPLICATION

(11) **EP 2 515 247 A1**
(43) Date of publication of application: **24.10.2012**
(21) Application number: 11305485.2
(22) Date of filing: 22.04.2011
(51) Int. Cl.: G06F 17/30

(54) **Internet browsing system**

(71) Applicant: Alcatel Lucent, 75007 Paris (FR)
(72) Inventor: Lou, Zhe, 2640, Mortsel (BE); Moons, Jan, 2220, Heist-Op-Den-Berg (BE)
(74) Representative: D'Halleweyn, Nele Veerle Trees Gertrudis

(57) **Abstract**

The present invention relates to an Internet browsing system for enabling a plurality of user communications devices to browse the internet where each user device of the plurality of user communications devices is coupled to the internet. The internet browsing system first comprises Information retrieving part that is adapted to retrieve browsing information related to a first user device of a plurality of user communications devices browsing the internet and additionally related to at least one further user communications device of a plurality of user communications devices browsing the internet. The internet browsing system further comprises a detecting part that is able to detect at least one further user communications device of the plurality of user communications devices browsing the same internet-content as the first user communications device where the detection is based on the browsing information. and additionally a pointer location determination part that is adapted to determine a pointer location for each user device of said plurality of user communications devices browsing said same internet-content; and a pointer location notification part that is adapted to notify each user communications device of said plurality of user communications devices browsing said same internet-content of said pointer location of each other user communications device of said plurality of user communications devices browsing said same internet-content.

## Description

The present invention relates to an Internet browsing system for enabling a plurality of user devices to browse the internet as described in claim 1, a related user device as described in claim 3, an Information exchange server as described in claim 4 and a method as described in claim 6.

Such an Internet browsing system, a related user device, a related Information exchange server and a related method are already known in the art, e.g. web browsers like Internet Explorer, Chrome from Google or Mozilla Firefox from Mozilla foundation being installed on any user communications device like a personal computer, mobile communications device like a Smartphone PDA or iPAD, or IPTV, etc. having internet access. In such an internet browsing system, when browsing the Internet, people may be interested to know who else is viewing the same website as they are currently browsing. People further are interested to see what, other people viewing the same web page, such web page being identified by an URL, as they, currently are viewing and reading, in order to share opinions, experiences and/or to discuss the subject of browsing (i.e. the content of the current web page) with such people.

In addition, such an internet browsing system may be complemented with a "Google Talk" web client application, which additionally provides people browsing the internet with means to establish a chat, voice and/or video communication session with persons on their buddy list or contact list. In other words, e.g. Google Talk enables two or more buddies or contacts while browsing the internet, to discuss any subject, but also discuss websites they currently are browsing. However, these people not necessarily are viewing the same web content and therefore a first buddy or person has no further indication what his buddies or contacts currently are doing.

Therefore a first user cannot be aware of who else is surfing the same webpage/site as he does and furthermore if he would be aware of people browsing the same webpage, such first user still doesn't have an indication of any real-time activities/behaviors of the other part. For instance user A only knows user B is viewing the same webpage as he mentioned this during a conversation, however user A doesn't know which paragraph user B is reading now; which hyperlink user B is interested in.

A problem of such system is that there is no solution enabling users to exchange and share Internet surfing experience apart from discussing visited websites over a communications session established between such people browsing the internet by means of a user communications device.

An objective of the present invention is to provide a system of the above known type but wherein users are better able to exchange and share Internet surfing experience during the browsing of the internet.

According to the invention, this object is achieved by the Internet browsing system for enabling a plurality of user communications devices to browse the internet as described in claim 1, a related user communications device as described in claim 4, an Information exchange server as described in claim 5 and a method as described in claim 6.

Indeed, by first retrieving browsing information related to a first user communications device of a plurality of user communications devices browsing the internet and additionally retrieving browsing information related to at least one further user communications device of the plurality of user communications devices browsing the internet at the same time followed by detecting at least one further user communications devices of the plurality of user communications devices browsing the same internet-content as the first user communications device at the same time, where the detecting of browsing the same internet content at the same time is based on the browsing information that is retrieved, subsequently determining a pointer location for each user communications device of the plurality of user communications devices browsing the same internet-content at the same time, where the pointer location is based on the browsing information retrieved and next notifying each user communications device of the plurality of user communications devices, which is browsing the same internet-content at the same time, of the pointer location of each other user device of the plurality of user communications devices browsing the same internet-content at the same time.

In this way each user device is aware of a pointer location of a further user communications device browsing the same internet content at the same time.

This notification can be done by presenting a first user with the identification of the at least one further user device browsing the same internet content as the first user is browsing currently together with information on the part i.e. the topic or the location of this internet content the at least one further user(s) is/are browsing. The pointer location of any further user communications device in practice can be presented at a screen of a first user communications device by means of an arrow or other indication at the screen of a first user communications device. Alternatively the pointer location can be notified by a circle, a rectangle, a polygon and other shapes that can be used for location indication.

The Internet is a global system of interconnected computer networks that use the standard Internet protocol Suite (TCP/IP) to serve billions of users worldwide. It is a *network of networks* that consists of millions of private, public, academic, business, and government networks, of local to global scope, that are linked by a broad array of electronic, wireless and optical networking technologies. Such internet may also imply a private computer network coupling a plurality of users of a restricted group, e.g. a company internet communications or computer network.

The internet content may be a webpage or relevant portion thereof which web page or portion thereof is identified by a Uniform Resource Locator, referred to as URL.

The Browsing information includes a user identification identifying a user or corresponding user communications device, a URL of the current website, a screen size, a screen resolution, a current mouse location where a screen size, a screen resolution are present for determining a relative current mouse location.

The pointer location of a user communications device may be the location of the mouse or the location of a finger pointing the location at a touch screen or alternatively may be the location of the point where a user is gazing at. This point location can be detected by using the eye-gazing technology.

A further characteristic feature of the present invention is described in claim 2.

The Internet browsing system comprises, in the first user communications device and in at least one further user device, a browsing information provisioning part that is adapted to provide browsing information of the respective user device of said plurality of user communications devices to the information exchange server.

Another characteristic feature of the present invention is described in claim 3,

The linternet browsing system further comprises an intercepting part that is adapted to intercept browsing information of a first user communications device of a plurality of user devices browsing the internet and at least one further user communications device of the plurality of user communications devices browsing the internet.

Further characterizing embodiments of the present communications method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents an internet browsing system wherein the present invention is executed;

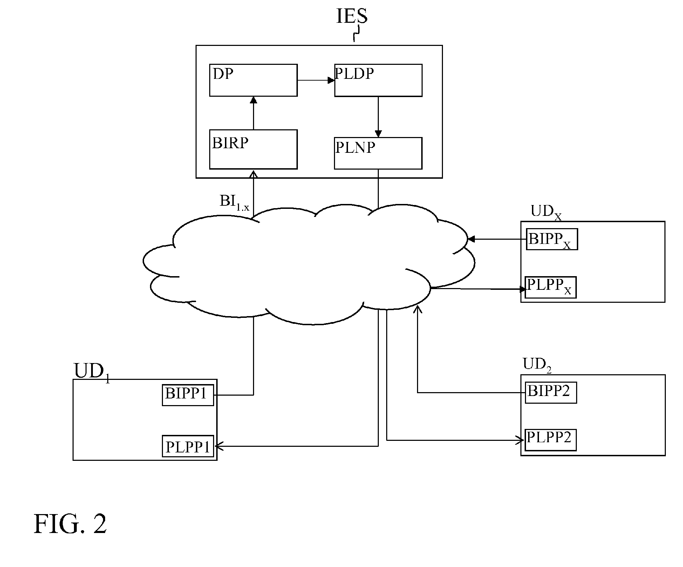

FIG. 2 represents the functional representation of an information exchange server and related user communications devices UD1, UD2,.., UDx as presented in FIG. 1.

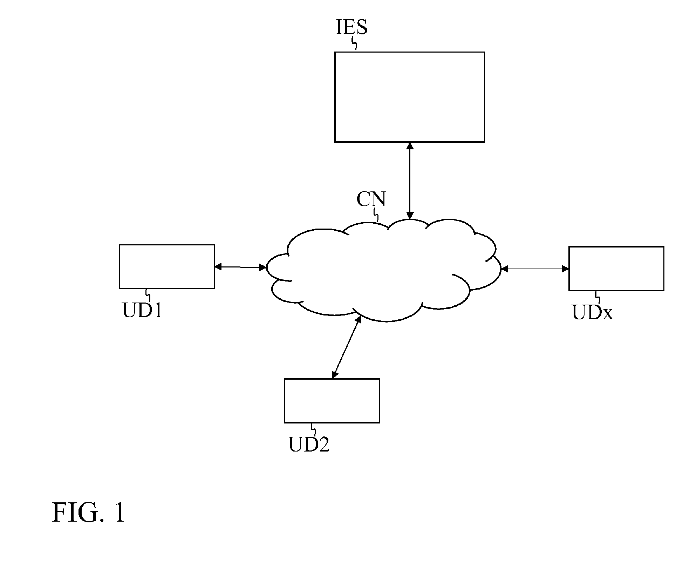

In the following paragraphs, referring to the drawings, an implementation of the present invention will be described. In the first paragraph of this description the main elements of the internet browsing system as presented in FIG. 1 are described. In the second paragraph, all connections between the before mentioned elements and described parts are defined.

Subsequently all relevant functional means of the information exchange server IES, and the user communications devices UD1, UD2,..,UDx are described followed by a description of all interconnections. In the succeeding paragraph the actual execution of the present invention is described.

The essential elements of the internet browsing system of the embodiment according to the present invention are an Information exchange server IES, a plurality of user communication devices UD1, UD2,..,UDx and a communications network CN as shown in FIG. 1.

In order to keep simplicity in this description it is chosen only to describe three user communications devices UD1, UD2,.., UDx although such a system normally includes a high number of user communications devices.

Such a user communications device comprises a processor and a program storage device whereon software can be installed further input means like a keyboard, a mouse and screen for viewing the browsed web pages. The screen additionally or alternatively may be a touch screen for inputting browsing instructions. In this embodiment this user communications device UD1 is a personal computer, and user communications devices UD2, .. ,UDx both are a Smartphone or personal digital assistant e.g. a windows-based, Android based or other Smartphone.

A further essential element of the present invention is the Information exchange server IES which may be a central network element forming part of, or being located in the internet. The Information exchange server IES functionality alternatively may also be distributed over the network or even be distributed over the user communications devices.

Each of the user communications devices UD1, UD2,..,UDx are coupled to the internet via an access network like a DSL network, an optical network, a cable network or other communications network like mobile communications networks 2G, 3G or even 4G mobile networks. The user communications device UD1 first comprises a browsing information providing part BIPP that is adapted to provide browsing information related to the user communications device UD1 to an Information exchange server IES. This browsing information retrieved, may comprise a user identification identifying a user or corresponding user communications device UD1, a URL of the current website browsed, a screen size, a screen resolution of the user communications device UD1, a current mouse location where a screen size, a screen resolution are relevant for determining a relative current mouse location.

The user communications device UD1 further comprises a pointer location presentation part PLPP that is able to receive the pointer location of at least one further user communications device and present the pointer location of each of these at least one further user communications device at the screen of the first user communications device UD1 or present it otherwise.

It is to be noted that the functional structure of each of the further user communications devices UD2,...,UDx is the same as described for the first user communications device UD1.

The Information exchange server IES comprises an Information retrieving part BIRP that is adapted to retrieve browsing information related to a first user device UD1 of the plurality of user devices browsing the internet and additionally adapted to retrieve browsing information related to at least one further user device UD2,..., UDx of the plurality of user communications devices browsing the internet.

The Information exchange server IES further comprises a detecting part DP that is adapted to detect at least one further user communications device of the plurality of user communications devices browsing the same internet-content as the first user communications device UD1 where the detecting is based on the browsing information retrieved or intercepted and a pointer location determination part PLDP that is able to determine a pointer location for each user communications device of the plurality of user communications devices browsing the same internet-content as the first user communications device UD1. Furthermore, the Information exchange server IES comprises a pointer location notification part PLNP that is adapted to notify each user communications device of the plurality of user devices browsing the same internet-content of the pointer location of each other user communications device of the plurality of user communications devices browsing the same internet-content as the first user communications device.

The Information retrieving part BIRP has an input-terminal that is at the same time an input-terminal of the Information Exchange Server IES. The Information retrieving part BIRP further is coupled to the detecting part DP that in turn is coupled to the pointer location determination part. The pointer location determination part is coupled to the pointer location notification part PLNP that has an input-terminal that is at the same time an output-terminal of the Information Exchange Server IES.

Each browsing information providing part of the respective user communications devices has an output-terminal that is at the same time an output of the respective user communications device.

Each pointer location presentation part of the respective user communications devices has an input-terminal that is at the same time an input of the respective user communications device.

In order to explain the actual operation of the present invention it is assumed that there is a number of people browsing the internet using their personal computer or for instance a Smartphone. A first person, using his personal computer, is browsing a certain webpage on a first topic, where this page is being identified as URL1. Each of the other users of respective user communication devices of the plurality of user communication devices UD2,...UDx are browsing some web pages too at the same time.

Further it is assumed that a user of a further user communications device UD2 is browsing the same web page as the first user communications device, UD1 the web-page being identified by URL1.

Each browsing information providing part of the respective user communication devices sends browsing information that is related to the respective user communications device UD1. UD2, ...UDx towards the Information exchange server IES. The browsing information is forwarded over the communications network CN, for instance being an access network coupled to the core internet network via a second access network or other network towards the Information exchange server IES. The Information retrieving part BIRP of the Information exchange server IES then retrieves the browsing information related to the first user device UD1 of the plurality of user communications devices browsing the internet and additionally the browsing information that is related to each of the further user communications device UD2,...UDx of the plurality of user communications devices that are used for browsing the internet at the same time.

The browsing information in this embodiment includes a user identification that identifies a user or a corresponding user communications device, a URL of the current website, a screen size, a screen resolution and a mouse location being the current pointer location for each of the user communications devices. The user of user communications device UD1 is browsing a web page identified by URL1, the user of user communications device UD2 is browsing a web page identified by URL2 and user of user communications device UDx is browsing the same web page as user of user communications device UD1 which web page is identified by URL1.

When the Information Exchange Service IES, by means of the detecting part DP, detects that two or more user communication devices are accessing the same web content or web pages by comparing the URLs, which are included in the browsing information that is forwarded by each of the user communication devices UD1, UD2,.., UDx, i.e. user of user communications device UD1 and UDX both are browsing a web page which is identified by URL1.

Subsequently the pointer location determination part PLDP of the Information exchange server IES determines a pointer location for each user device of the plurality of user communications devices browsing the same internet-content which in this embodiment are respective user communications devices UD1 and UDx both browsing a web page that is identified by URL1. The determination of the URL browsed, again is based on the retrieved browsing information. As each user communication device additionally includes in the browsing information sent, its screen size, its screen resolution and a mouse location being the current pointer location for each of the user communications devices, the pointer location determination part PLDP is able to determine, based on the given screen size, the screen resolution and mouse location of the first user communications device to which element, assume item or element X in the upper right corner of the webpage identified by URL1, the mouse pointer of the first user communication device is pointing at.

Similarly, in order to present the user of a further user communications device UDx with the location of the element, i.e. Item or Element X, the mouse at the first user communication device is pointing at, the determination part PLDP is able to calculate the mouse location of this item or element X at the screen of the further user communications device UDx the mouse at the first user communication device is pointing at.

The determination part PLDP determines the pointer location for pointing at this item or element X at user communications device UDx based on the given the screen size and the screen resolution of user communications device UDx.

The pointer location notification part PLNP subsequently notifies the user communications device UDX of the pointer location of the pointer of the first user communications device. This pointer location then is presented at the further user communications device UDx by showing a pointer having a different color, possibly in combination with a communications device identifier of communications device UD1 the pointer belongs to.

The other way around, the pointer location of the further user communications device UDx is determined in the same way and subsequently presented at the first user communications device UD1. This pointer location then is presented at the first user communications device UD1 by showing a pointer having a different color, possibly in combination with a communications device identifier of communications device UDx the pointer belongs to.

The pointer location of the further user communications device UDx is forwarded towards communications device UD1 using the identification of communications device UD1 as included in the browsing information forwarded by communications device UD1.

In such way a mouse movement in one screen can be tracked and further mapped to a "mirror" mouse movement on another screen.

Alternatively a the notification can be done by opening an information exchange channel between the first and each of the further user communication device(s).

A final remark is that embodiments of the present invention are described above in terms of functional blocks. From the functional description of these blocks, given above, it will be apparent for a person skilled in the art of designing electronic devices how embodiments of these blocks can be manufactured with well known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Internet browsing system for enabling a plurality of user communications devices (UD1, UD2,..,UDx) to browse the internet, each user device of said plurality of user communications devices (UD1, UD2,..,UDx) being coupled to the internet, **CHARACTERISED IN THAT** said internet browsing system comprises:
a. Information retrieving part (BIRP), adapted to retrieve browsing information related to a first user device (UD1) of said plurality of user communications devices browsing the internet and related to at least one further user communications device (UD2,...UDx) of said plurality of user communications devices browsing the internet; and
b. a detecting part (DP), adapted to detect at least one) further user communications device of said plurality of user communications devices browsing the same internet-content as said first user communications device, based on said browsing information; and
c. a pointer location determination part (PLDP), adapted to determine a pointer location for each user device of said plurality of user communications devices browsing said same internet-content, (based on said browsing information); and
d. a pointer location notification part (PLNP), adapted to notify each user communications device of said plurality of user communications devices browsing said same internet-content of said pointer location of each other user communications device of said plurality of user communications devices browsing said same internet-content.

2. Internet browsing system according to claim 1, **CHARACTERISED IN THAT** said Internet browsing system further comprises, in said first user communications device (UD1) and in said at least one further user device (UD2,...UDx), a browsing information provisioning part , adapted to provide browsing information of/on respective user device of said plurality of user communications devices.

3. Internet browsing system according to claim 1, **CHARACTERISED IN THAT** said Internet browsing system further comprises an intercepting part adapted to intercept browsing information of/on a first user communications device (UD1) of said plurality of user devices browsing the internet and at least one further user communications device (UD2,...UDx) of said plurality of user devices browsing the internet.

4. User communications device (UD1) for use in a Internet browsing system according to claim 1, **CHARACTERISED IN THAT** said user device (UD1), further comprises a browsing information providing part (BIPP), adapted to provide browsing information related to said user communications device (UD1).

5. Information exchange server, for use in an Internet browsing system according to claim 1, **CHARACTERISED IN THAT** said Information exchange server (IES) further comprises:
b. a. Information retrieving part (BIRP), adapted to retrieve browsing information related to a first user device (UD1) of said plurality of user devices browsing the internet and related to at least one further user device (UD2,...UDx) of said plurality of user devices browsing the internet; and
c. a detecting part (DP), adapted to detect at least one further user device of said plurality of user devices browsing the same internet-content as said first user device based on said browsing information; and
d. pointer location determination part (PLDP), adapted to determine a pointer location for each user device of said plurality of user devices browsing said same internet-content; and
e. a pointer location notification part (PLNP), adapted to notify each user device of said plurality of user devices browsing said same internet-content of said pointer location of each other user device of said plurality of user devices browsing said same internet-content.

6. Internet browsing method for enabling a plurality of user communications devices (UD1, UD2,..,UDx) to browse the internet, each user device of said plurality of user communications devices (UD1, UD2,..,UDx) being coupled to the internet (CN), said method comprising the steps of:
a. retrieving browsing information related to a first user device (UD1) of said plurality of user communications devices browsing the internet and related to at least one further user communications device (UD2,...UDx) of said plurality of user communications devices browsing the internet; and
b. detecting at least one) further user communications device of said plurality of user communications devices browsing the same internet-content as said first user communications device, based on said browsing information; and
c. determining a pointer location for each user device of said plurality of user communications devices browsing said same internet-content, (based on said browsing information); and
e. notifying each user communications device of said plurality of user communications devices browsing said same internet-content of said pointer location of each other user communications device of said plurality of user communications devices browsing said same internet-content.
